(19) Europäisches Patentamt
European Patent Office
Office européen des brevets

(11) Veröffentlichungsnummer: **0 035 108**
**B1**

(12) **EUROPÄISCHE PATENTSCHRIFT**

(45) Veröffentlichungstag der Patentschrift: **11.12.85**

(21) Anmeldenummer: **81100423.3**

(22) Anmeldetag: **22.01.81**

(51) Int. Cl.$^4$: **C 08 K 3/04,** C 08 K 3/10, C 08 K 3/22, C 08 L 23/16, C 08 L 25/10

(54) **Flammabweisende Formmassen.**

(30) Priorität: **24.01.80 DE 3002397**

(43) Veröffentlichungstag der Anmeldung:
**09.09.81 Patentblatt 81/36**

(45) Bekanntmachung des Hinweises auf die Patenterteilung:
**11.12.85 Patentblatt 85/50**

(84) Benannte Vertragsstaaten:
**AT BE CH DE FR GB IT LI NL SE**

(58) Entgegenhaltungen:
**GB-A-1 161 052**
**GB-A-2 019 417**
**US-A-3 239 579**
**US-A-3 428 707**
**US-A-3 508 872**
**US-A-3 821 140**

(73) Patentinhaber: **WACKER-CHEMIE GMBH**
**Prinzregentenstrasse 22**
**D-8000 München 22 (DE)**

(72) Erfinder: **Weise, Carlos, Dr. Dipl.-Chem.**
**Robert-Koch-Strasse 152**
**D-8263 Burghausen (DE)**
Erfinder: **Wolfer, Dietrich, Dr. Dipl.-Chem**
**Untereching 88**
**A-5110 Salzburg (AT)**
Erfinder: **Patzke, Jörg, Dr. Dipl.-Chem**
**Marienberger Strasse 41**
**D-8263 Burghausen (DE)**

**EP 0 035 108 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschriebung**

Formmassen auf Grundlage von anderem organischem Polymer als Diorganopolysiloxan und von Diorganopolysiloxan, die flammabweisend sind, sind bereits bekannt (vgl. z. B. US 34 28 707, ausgegebenen 18. Februar 1969, I. L. Amos und Mitarbeiter, The Dow Chemical Company). Es sind auch Formmassen, die Diorganopolysiloxan, anderes organisches Polymer als Diorganopolysiloxan und Siliciumdioxyd mit einer Oberfläche von mindestens 50 $m^2/g$ enthalten, schon bekannt (vgl. z. B. US 32 39 579, ausgegeben 8. März 1966, E. A. Barber und Mitarbeiter, The Dow Chemical Company). Die erfindungsgemäßen Formmassen auf Grundlage von anderem organischem Polymer als Diorganopolysiloxan und von Diorganopolysiloxan sowie gegebenenfalls Siliciumdioxyd mit einer Oberfläche von mindestens 50 $m^2/g$ sind in noch höherem Ausmaß flammabweisend als vergleichbare, bisher bekannte Formmassen.

Gegenstand der Erfindung sind flammabweisende Formmassen auf Grundlage von anderem organischem Polymer als Diorganopolysiloxan und von Diorganopolysiloxan, wobei dessen Si-gebundene aliphatische Kohlenwasserstoffreste Methyl-, Ethyl-, n-Propyl-, Isopropyl- oder Vinylreste sind. In Mengen von 1 bis 20 Gew.-%, bezogen auf das Gewicht von anderen organischen Polymeren als Diorganopolysiloxan, sowie gegebenenfalls Siliciumdioxyd mit einer Oberfläche von mindestens 50 $m^2/g$, dadurch gekennzeichnet, daß sie zusätzlich mindestens einen Stoff, der den Stoffklassen

(a) Graphit oder

(b) Edelmetallen oder deren Verbindungen bzw. Komplexe angehört, enthalten.

Die gemäß GB—A—20 19 417, Seite 2, Zeile 17 "indispensable" aliphatischen einwertigen Kohlenwasserstoffreste mit 4 bis 20 Kohlenstoffatomen sind beim Gegenstand der Erfindung ausgeschlossen. Somit konnte GB—A—20 19 417 den Gegenstand der Erfindung auch nicht nahelegen.

Es ist überraschend, daß Graphit oder Edelmetalle, die aus US—A—35 08 872 bzw. GB—A—11 61 052 als Flammschutzmittel für Organopolysiloxane bekannt sind, jedoch wie anhand der unten folgenden Vergleichsansätze bei Abwesenheit von Organopolysiloxan nicht wirken, bei den erfindungsgemäßen niedrigen Organopolysiloxan-Anteilen Flammabweisung bewirken.

Beispiele für andere organische Polymere als Diorganopolysiloxane sind Polymere, die durch Polymerisation von mindestens einer organischen Verbindung mit mindestens einer aliphatischen Kohlenstoff-Kohlenstoff-Doppelbindung erzeugt werden. Solche organischen Verbindungen mit mindestens einer aliphatischen Kohlenstoff-Kohlenstoff-Doppelbindung können z. B. Kohlenwasserstoffe sein, wie Äthylen, das durch Nieder-, Mittel- oder Hochdruckverfahren polymerisiert werden kann, Propylen, Isobutylen, Methylbuten-1, Buten-1, Methylpenten-1, Isopren, Butadien, Styrol, Hexadien, Dicyclopentadien oder Äthylidennorbornen; sie können z. B. chlorierte Kohlenwasserstoffe sein, wie Vinylchlorid, Vinylidenchlorid und Chloropren; sie können z. B. alpha-beta-ungesättigte Säuren oder deren Derivate sein, wie Acrylsäure, Methacrylsäure, Acrylamid, Methacrylamid, Acrylnitril, Methacrylnitril, Methylacrylat, Methylmethacrylat oder Äthylmethacrylat; sie können schließlich auch z. B. Carbonsäureester von ungesättigten Alkoholen sein, wie Vinylacetat oder Vinyllaurat.

Wichtige Beispiele für Polymere, die durch Polymerisation von mehr als einer organischen Verbindung mit mindestens einer aliphatischen Kohlenstoff-Kohlenstoff-Doppelbindung erzeugt werden, sind solche aus Äthylen und Propylen, Terpolymere aus Äthylen, Propylen und einem Dien (EPDM), wie Butadien, Hexadien, Dicyclopentadien oder Äthylidennorbornen, aus Äthylen und Buten-1, aus Isobutylen und Isopren, aus Äthylen und Vinylacetat, aus Butadien und Acrylnitril, aus Styrol und Butadien, aus Styrol und Acrylnitril, aus Styrol und Methylmethacrylat, aus Acrylnitril, Styrol und Butadien, aus Äthylen und Methylacrylat und aus Vinylchlorid und Vinylacetat.

Anderes Polymer also Diorganopolysiloxan kann auch mindestens ein Polymer sein, das durch mindestens eine weitere Reaktionsstufe aus einem Polymerisat hergestellt wurde, das durch Polymerisation von mindestens einer organischen Verbindung mit mindestens einer aliphatischen Kohlenstoff-Kohlenstoff-Doppelbindung erzeugt wurde. Beispiele für derartige Polymere sind Polyvinylalkohole, Verseifungsprodukte von Mischpolymeren aus Äthylen und Vinylacetat, Polyvinylacetale, wie Polyvinylbutyrale, und chlorsulfonierte Polyäthylene.

Weitere Beispiele für andere organische Polymere als Diorganopolysiloxane sind Polyamide, Polyimide, Polycarbonate, Polyurethane, Polyacetale, andere Polyäther, wie Polyphenylenäther und Polyglykole, z. B. Poly-(propylenoxyd)-allylglycidyläther, Polysulfone, Polyester, sie Polyterephthalsäureester, Polyepichlorhydrine und Polycarbodiimide.

Die anderen Polymeren als Diorganopolysiloxane können mindestens als Bestandteile von Gemischen solche sein, die mit Organopolysiloxan, einschließlich Diorganopolysiloxan, durch chemische Bindung verknüpft sind und Pfropfpolymere oder aber Blockmischpolymere darstellen bzw. in Gegenwart von Organopolysiloxan, einschließlich Diorganopolysiloxan, durch Polymerisation von mindestens einer organischen Verbindung mit mindestens einer aliphatischen Kohlenstoff-Kohlenstoff-Doppelbindung erzeugt wurden. Beispiele für solche anderen Polymeren als Diorganopolysiloxane sind Organopolysiloxan-Polyolefine, Organopolysiloxan-Polystyrol, Organopolysiloxan-Polyacrylate, Organopolysiloxan-Polyamide, Organopolysiloxan-Polycarbonate, Organopolysiloxan-Polyäther, Organopolysiloxan-Polycarbodiimide und Organopolysiloxan-Polyurethane sowie Organopolysiloxan-Polyäthylenvinylacetate.

Die Herstellung von einigen der vorstehend genannten anderen Polymeren als Diorganopolysiloxan, die mit Organopolysiloxan chemisch verknüpft sind oder wenigstens in Gegenwart von Organopolysiloxan durch Polymerisation von mindestens einer organischen Verbindung mit mindestens einer aliphatischen Kohlenstoff-Kohlenstoff-Doppelbindung erzeugt wurden, ist beispielsweise in DE—OS—26 41 201 (offengelegt 16. März 1978, Consortium für elektrochemische Industrie GmbH), US 40 80 400 (ausgegeben 21. März 1978, E. R. Martin, SWS Silicones Corporation) und US 41 23 472 (ausgegeben 31, Oktober 1978, I. Ch. Getson und Mitarbeiter, SWS Silicones Corporation beschrieben.

Wie schon aus den obigen Ausführungen ersichtlich sein sollte, können die erfindungsgemäßen Formmassen ebenso eine einzelne Art von anderem organischem Polymer als Diorganopolysiloxan wie ein Gemisch aus mindestens zwei verschiedenen Arten von anderem organischem Polymer als Dioganopolysiloxan enthalten.

Unter dem Begriff "Diorganopolysiloxan" sollen hier in Beschreibung und Patentansprüchen solche Organosiliciumverbindungen verstanden werden, die zu mindestens 90 Gewichtsprozent aus Diorganopolysiloxaneinheiten aufgebaut und vorzugsweise frei von Sigebundenem Wasserstoff sind.

Vorzugsweise enthalten die erfindungsgemäßen Formmassen als Diorganopolysiloxane solche, die durch die allgemeine Formel

$$Z_nSiR_{3-n}O(SiR_2O)_xSiR_{3-n}Z_n$$

wiedergegeben werden können. In dieser Formel bedeutet R gleiche oder verschiedene, einwertige, gegebenenfalls substituierte Kohlenwasserstoffreste, die, wenn sie aliphatisch sind, Methyl-, Ethyl-, n-Propyl-, Isopropyl- oder Vinylreste sind, Z eine Hydroxylgruppe oder Kohlenwasserstoffoxygruppe, n ist 0 oder 1, bei der Hauptmenge der Diorganopolysiloxane vorzugsweise 0, und x ist eine Zahl mit einem solchen Wert, daß die durchschnittliche Viskosität dieser Diorganopolysiloxane mindestens 50 mPa·s bei 25°C beträgt. Vorzugsweise ist der Wert von x jedoch so hoch, daß die Viskosität der Dioganopolysiloxane mindestens $10^6$ mPa·s bei 25°C beträgt.

Innnerhalb bzw. entlang der Siloxankette der Diorganopolysiloxane der oben angegebenen Formel können, was durch derartige Formeln üblicherweise nicht dargestellt wird, zusätzlich zu den Diorganosiloxaneinheiten ($SiR_2O$) noch andere Siloxaneinheiten vorliegen mit der Maßgabe, daß die Menge der $SiR_2O$-Einheiten mindestens 90 Gewichtsprozent, bezogen auf das Gewicht des jeweiligen Diorganopolysiloxanes oder der jeweiligen Diorganopolysiloxane, beträgt. Beispiele für solche anderen, meist nur als Verunreinigungen vorliegenden Siloxaneinheiten sind solche der Formeln $RSiO_{3/2}$, $R_3SiO_{1/2}$ und $SiO_{4/2}$, wobei R jeweils die oben dafür angegebene bedeutung hat.

In gleichen oder verschiedenen Molekülen der oben angegebenen Formel können die Werte für n untereinander gleich oder verschieden sein.

Bei verschiedenen Molekülen der oben angegebenen Formel können die Werte für x verschieden sein.

Beispiele für andere Kohlenwasserstoffreste R als aliphatische Kohlenwasserstoffreste R sind Arylreste, wie der Phenylrest; Alkarylreste, wie Tolylreste; und Aralkylreste, wie der beta-Phenyläthylrest.

Bevorzugte Beispiele für substituierte Kohlenwasserstoffreste R sind halogenierte Kohlenwasserstoffreste, wie der 3,3,3-Trifluorpropylrest sowie Chlorphenyl- und Bromtolylreste; weiterhin Cyanalkylreste, wie der beta-Cyanäthylrest.

Die oben angegebenen Beispiele für Kohlenwasserstoffreste R gelten mit Ausnahme des Vinylrestes auch für die Kohlenwasserstoffreste in den Kohlenwasserstoffoxygruppen Z.

Vorzugsweise enthalten die substituierten und unsubstituierten Kohlenwasserstoffgruppen R und die Kohlenwasserstoffoxygruppen Z jeweils 1 bis 18 Kohlenstoffatome.

Schon wegen der leichteren Zugänglichkeit sind in den Diorganopolysiloxanen vorzugsweise mindestens 95% der Anzahl der organischen Reste und damit der Reste R, Methylreste. Wenn in den Diorganopolysiloxanen jedoch mindestens 0,01% der Anzahl der organischen Reste Arylreste, vorzugsweise Phenylreste, sind, so sind die Formmassen noch flammabweisender und dies um so stärker, je größer der Anteil der SiC-gebundenen Phenylreste ist.

Die erfindungsgemäßen Formmassen enthalten Diorganopolysiloxan in Mengen von 1 bis 20 Gewichtsprozent, bezogen auf das Gewicht von anderem organischem Polymer als Diorganopolysiloxan.

Die erfindungsgemäßen Formmassen können ebenso eine einzelne Art von Diorganopolysiloxan wie ein Gemisch aus mindestens zwei verschiedenen Arten von Diorganopolysiloxan enthalten.

Die Anwesenheit von Siliciumdioxyd mit einer Oberfläche von mindestens 50 $m^2/g$ in den erfindungsgemäßen Formmassen ist nicht unbedingt erforderlich. Siliciumdioxyd mit einer Oberfläche von mindestens 50 $m^2/g$ erleichtert jedoch das Vermischen der Bestandteile der erfindungsgemäßen Formmassen.

Das Siliciumdioxyd mit einer Oberfläche von mindestens 50 $m^2/g$ kann pyrogen erzeugtes Siliciumdioxyd, unter Erhaltung der Struktur entwässertes Kieselsäure-Hydrogel oder eine beliebige andere Art von gefälltem, eine Oberfläche von mindestens 50 $m^2/g$ aufweisendem Siliciumdioxyd oder ein Gemisch aus mindestens zwei der vorstehend genannten Siliciumdioxydarten sein. Bevorzugt ist pyrogen erzeugtes Siliciumdioxyd.

Das Siliciumdioxyd mit einer Oberfläche von mindestens 50 $m^2/g$ kann hydrophobiert sein, beispielsweise durch Behandlung mit Trimethyläthoxysilan, und/oder anders an der Oberfläche modifiziert

sein, wie durch Beschichtung mit Stearinsäure, Zinkoder Calciumstearat, wobei diese Behandlungen vor, während oder nach dem Vermischen mit zumindest einem Teil der übrigen Bestandteile der jeweiligen Formmasse erfolgen können.

Die hier in Beschreibung und mindestens einem Patentanspruch angegebenen Werte für Oberflächengrößen von Siliciumdioxyd sind BET-Werte, also Werte, die durch Stickstoffadsorption gemäß ASTM Special Technical Publication, No. 51, 1941, Seite 95 ff., bestimmt werden.

Es gibt keine entscheidende obere Grenze für die Größe der Oberfläche von Siliciumdioxyd mit einer Oberfläche von mindestens 50 $m^2/g$. Vorzugsweise beträgt diese Oberfläche 100 bis 600 $m^2/g$.

Die Menge von Siliciumdioxyd mit einer Oberfläche von mindestens 50 $m^2/g$ in den erfindungsgemäßen Formmassen beträgt vorzugsweise höchstens 50 Gewichtsprozent, insbesondere 0,3 bis 10 Gewichtsprozent, jeweils bezogen auf das Gewicht von anderem organischem Polymer als Diorganopolysiloxan.

Der Graphit (a) muß selbstverständlich eine Teilchengröße haben, die eine gleichmäßige Verteilung des Graphits in den Formmassen gewährleistet. Vorzugsweise beträgt der Teilchendurchmesser des Graphits höchstens 2 mm.

Enthalten die erfindungsgemäßen Formmassen Graphit (a), so vorzugsweise in Mengen von 0,01 bis 20 Gewichtsprozent, insbesondere 0,1 bis 10 Gewichtsprozent, jeweils bezogen auf das Gewicht von anderem organischem Polymer als Diorganopolysiloxan.

Bei den Edelmetallen oder deren Verbindungen bzw. Komplexen (b) kann es sich um Silber, Gold oder Platinmetalle, nämlich Ruthenium, Rhodium, Palladium, Osmium, Iridium der Platin oder um ein Gemisch aus mindestens zwei solcher Elemente oder um mindestens eine Verbindung oder mindestens einen Komplex von mindestens einem solchen Element handeln. Bevorzugt sind metallisches Platin, gegebenenfalls auf inertem Träger, wie Siliciumdioxyd, und Verbindungen bzw. Komplexe von Platin, wie Platindioxyd, $H_2PtCl_6$ $6H_2O$, Bis-(gamma-picolin)-platindichlorid, Platin-Divinyltetramethyldisiloxan-Komplexe mit oder ohne Gehalt an nachweisbarem anorganischem Halogen und Platin-Olefin-Komplexe, Enthalten die erfindungsgemäßen Formmassen Edelmetall oder Verbindung oder Komplex von Edelmetall (b), so vorzugsweise in Mengen von 0,0001 bis 0,1 Gewichtsprozent, insbesondere 0,001 bis 0,02 Gewichtsprozent, jeweils bezogen auf das Gewicht von anderem organischem Polymer als Diorganopolysiloxan.

Die erfindungsgemäßen Formmassen können einen Stoff oder mehr Stoffe von nur einer der Klassen (a) oder (b) enthalten, sie können aber auch mindestens einen Stoff aus den Klassen (a) und (b) enthalten.

Zusätzlich zu den bisher erwähnten Stoffen können die erfindungsgemäßen Formmassen Stoffe enthalten, die in Formmassen auf Grundlage von anderem organischem Polymer als Diorganopolysiloxan oder in Formmassen auf Grundlage von Diorganopolysiloxanen oder in Formmassen auf Grundlage von anderem organischem Polymer als Diorganopolysiloxan und von Diorganopolysiloxan als zusätzliche Stoffe auch bisher vorliegen konnten. Beispiele für solche weiteren Stoffe sind andere Füllstoffe mit einer Oberfläche von mindestens 50 $m^2/g$ als Siliciumdioxyd mit einer Oberfläche von mindestens 50 $m^2/g$ Füllstoffe mit einer Oberfläche von weniger als 50 $m^2/g$, faserige Füllstoffe, wie Asbest, Pigmente, Lösliche Farbstoffe, Verarbeitungshilfsmittel, Alterungsschutzmittel, Hitzestabilisatoren, herkömmliche flammabweisend machende Mittel, wie halogenierte organische Verbindungen, Aluminiumoxydtrihydrat, Antimonoxyd, Phosphate oder Phosphite, Weichmacher, zellenerzeugende Mittel, wie Azodicarbonamid, Vernetzungsmittel mit Ausnahme von Organopolysiloxanen mit Si-gebundenem Wasserstoff, Mittel zum Regeln der Geschwindigkeit der Vernetzung und Vernetzungshilfsmittel.

Beispiele für andere Füllstoffe mit einer Oberfläche von mindestens 50 $m^2/g$ als Siliciumdioxyd mit einer Oberfläche von mindestens 50 $m^2/g$ bzw. für Füllstoffe mit einer Oberfläche von weniger als 50 $m^2/g$ bzw. Pigmente sind Silikate, wie Calciumsilikat und Zirkoniumsilikat, Quarzmehl, Diatomenerde, Calciumcarbonat, Ruße, Glimmer, Titanate, Zinkoxyd, Bleiglätte, Mennige sowie pyrogen erzeugtes, gefälltes oder kristallines Titandioxyd.

Enthalten die erfindungsgemäßen Formmassen andere Füllstoffe mit einer Oberfläche von mindestens 50 $m^2/g$ als Siliciumdioxyd mit einer Oberfläche von mindestens 50 $m^2/g$ oder Füllstoffe mit einer Oberfläche von weniger als 50 $m^2/g$, so vorzugsweise in Mengen von höchstens 800 Gewichtsprozent, insbesondere höchstens 200 Gewichtsprozent, jeweils bezogen auf das Gewicht von anderem Polymer als Diorganopolysiloxan.

Auch die anderen Füllstoffe als Siliciumdioxyd mit einer Oberfläche von mindestens 50 $m^2/g$, gleichgültig ob diese Füllstoffe eine Oberfläche von mindestens 50 $m^2/g$ oder weniger haben, können an ihrer Oberfläche hydrophobiert oder anders modifiziert sein.

Beispiele für Vernetzungsmittel sind organische peroxydische Verbindungen wie Acylperoxyde, z. B. Dibenzoylperoxyd, Bis-(4-chlorbenzoyl)-peroxyd, Bis-(2-chlorbenzoyl)-peroxyd und Bis-(2,4-dichlorbenzoyl)-peroxyd; Arylperoxyde, z. B. Dicumylperoxyd; Perketale, wie 2,5-Bis-(tert.-butylperoxy)-2,5-dimethylhexan und 2,5-Bis-(tert.-butylperoxyd)-2,5-dimethylhexin-3; und Percarbonate, wie tert.-Butylperoxyisopropylcarbonat, sowie Schwefel oder organische Schwefelspender, wie Tetramethylthiuramdisulfid.

Beispiele für Vernetzungshilfsmittel sind Triallylcyanurat und Butandioldimethacrylat.

Eine Vernetzung kann aber auch durch ionisierende Strahlen, wie beta-Strahlen oder Röntgenstrahlen erfolgen.

Es sei jedoch in diesem Zusammenhang betont, daß eine Vernetzung der erfindungsgemäßen Formmassen nicht immer erforderlich ist.

Enthalten die erfindungsgemäßen Formmassen Vernetzungsmittel, so vorzugsweise in Mengen von höchstens 10 Gewichtsprozent, insbesondere höchstens 5 Gewichtsprozent, jeweils bezogen auf das Gewicht von anderem organischem Polymer als Diorganopolysiloxan.

Das Vermischen der Bestandteile der erfindungsgemäßen Formmassen kann bei Temperaturen von −20°C bis +400°C, vorzugsweise bei +20°C bis +150°C, erfolgen. Dabei dürfen hitzeempfindliche Bestandteile, wie organische peroxydische Verbindungen, natürlich nur bei Temperaturen eingemischt werden, bei denen sie sich nicht verändern. Das Vermischen erfolgt wegen des geringeren Aufwands, vorzugsweise beim Druck der umgebenden Atmosphäre, als bei 1 bar oder etwa 1 bar. Falls erwünscht, können aber auch höhere oder niedrigere Drücke angewendet werden.

Mit der Maßgabe der Vermeidung einer vorzeitigen Vernetzung können die Bestandteile der erfindungsgemäßen Massen in beliebiger Reihenfolge miteinander vermischt werden. Vorzugsweise werden jedoch zumindest Diorganopolysiloxan, Stoff, der den Stoffklassen

(a) Graphit oder

(b) Edelmetallen oder deren Verbindungen bzw, Komplexe

angehört, und, falls mitverwendet, Siliciumdioxyd mit einer Oberfläche von mindestens 50 m²/g mineinander vermischt und dann erst dieses Gemisch mit den übrigen Bestandteilen der erfindungsgemäßen Formmassen vermischt, um eine besonders gleichmäßige Verteilung aller Bestandteile der erfindungsgemäßen Formmassen zu erzielen und zur Vereinfachung der Lagerung.

Das Vermischen der Bestandteile der erfindungsgemäßen Formmassen kann mittels üblicher Mischvorrichtungen, wie Innenmischer, Kneter oder Walzen erfolgen.

Die Formgebung und gegebenenfalls Vernetzung der erfindungsgemäßen Formmassen kann auf beliebige Weise erfolgen, wie sie auch bisher bei Formmassen auf Grundlage von anderem organischem Polymer als Diorganopolysiloxan oder bei Formmassen auf Grundlage von Diorganopolysiloxan oder bei Formmassen auf Grundlage von anderem Polymer also Diorganopolysiloxan und von Diorganopolysiloxan angewandt wurde.

Die erfindungsgemäßen Formmassen eignen sich beispielsweise zur Herstellung von elektrischen Isolierungen, die, wenn sie kein Halogen in größeren Mengen enthalten, im Falle eines Brandes auch keinen Halogenwasserstoff in größeren Mengen abspalten können, der elektrische oder elektronische Systeme, z. B. in Rechenanlagen, nachrichtentechnischen Einrichtungen oder Kernkraftwerken schädigen könnten.

Die erfindungsgemäßen Formmassen sind nicht nur in stärkerem Ausmaß flammabweisend als vergleichbare, bisher bekannte Formmassen, sie neigen vielmehr auch weniger zur Bildung von Tropfen beim Verbrennen und sie besitzen mitunter auch höheren spezifischen elektrischen Widerstand. Sie lassen sich weiterhin leichter extrudieren und nach Verpressen leichter entformen. Sie haben auch geringere Oberflächenklebrigkeit.

In den folgenden Beispielen beziehen sich alle Angeben von Teilen auf das Gewicht. Bei dem in den folgenden Beispielen verwendeten Komplex von Platin handelt es sich jeweils um den Platin-1,3-Divinyl-1,1,3,3-tetramethyldisiloxan-Komplex, hergestellt gemäß US 38 14 730 (B. D. Karstedt, General Electric Company, ausgegeben 4. Juni 1974), Beispiel 6.

Das Ausmaß der Flammabweisung wird jeweils durch den bei der Bestimmung des Sauerstoffindex (LOI) nach ASTM D-2863 erhaltenen Wert angegeben. Je höher dieser Wert ist, um so höher ist das Ausmaß der Flammabweisung. Der spezifische elektrische Widerstand ist nach DIN 53482/53596 bestimmt.

Beispiel 1

Jeweils 100 Teile Äthylen-Propylen-Dien-Terpolymer (EPDM, wobei es sich bei dem Dien vermutlich um Butadien handelt) werden mit einem Gemisch, das aus 100 Teilen durch Trimethylsiloxygruppen endblockiertem Dimethylpolysiloxan mit einer Viskosität von $10^7$ mPa s bei 25°C, 10 Teilen eines in den endständigen Einheiten je eine Si-gebundene Hydroxylgruppe aufweisenden Dimethylpolysiloxans mit einer Viskosität von 60 mPa s bei 25°C und 40 Teilen pyrogen erzeugtem Siliciumdioxyd mit einer Oberfläche von 150 m²/g bereitet wurde, in den in Tabelle 1 angegebenen Mengen und den in Tabelle 1 angegebenen weiteren Stoffen und schließlich mit 3 Teilen Dicumylperoxyd vermischt. Aus den so erhaltenen Mischungen werden durch 15 Minuten Pressen bei 170°C in einer Form 2 mm dicke Platten hergestellt. Eigenschaften dieser Platten sind ebenfalls in Tabelle 1 angegeben.

TABELLE 1

| | Ansatz | | Vergleichsansätze | | | | |
|---|---|---|---|---|---|---|---|
| | 1 | 2 | a | b | c | d | e |
| Mischung aus Dimethylpolysiloxan und $SiO_2$ Teile | 5 | 5 | 0 | 5 | 0 | 0 | 0 |
| Cerhydroxyd Teile | 0 | 0 | 0 | 0 | 1 | 0 | 0 |
| Komplex von Platin Teile | 0,002 | 0 | 0 | 0 | 0 | 0,002 | 0 |
| Graphit Teile | 0 | 4 | 0 | 0 | 0 | 0 | 4 |
| LOI % | 22,0 | 23,5 | 17,5 | 18,5 | 17,5 | 17,5 | 18,5 |
| Tropfen beim Verbrennen | nein | nein | ja | nein | ja | ja | ja |

Beispiel 2

Zunächst werden 1000 Teile EPDM mit 200 Teilen aliphatischem Weichmacher, 1000 Teilen Aluminiumsilikat, 50 Teilen Zinkoxyd und 10 Teilen Stearinsäure vermischt. Dann werden jeweils 100 Teile dieser Mischung mit dem Gemisch, das aus 100 Teilen durch Trimethylsiloxygruppen endblockiertem Dimethylpolysiloxan mit einer Viskosität von $10^7$ mPa s bei 25°C, 10 Teilen eines in den endständigen Einheiten je eine Si-gebundene Hydroxylgruppe aufweisenden Dimethylpolysiloxans mit einer Viskosität von 60 mPa s bei 25°C und 40 Teilen pyrogen erzeugtem Siliciumdioxyd mit einer Oberfläche von 150 $m^2/g$ bereitet wurde, in den in Tabelle 2 angegebenen Mengen und den in Tabelle 2 angegebenen weiteren Stoffen und schließlich mit 3 Teilen Dicumylperoxyd vermischt. Aus den so erhaltenen Mischungen werden durch 15 Minuten Pressen bei 170°C in einer Form 2 mm dicke Platten hergestellt. Eigenschaften dieser Platten sind ebenfalls in Tabelle 2 angegeben.

TABELLE 2

| | Ansatz | | | Vergleichsansätze | | | | |
|---|---|---|---|---|---|---|---|---|
| | 1 | 2 | 3 | a | b | c | d | e |
| Mischung aus Dimethylpolysiloxan und $SiO_2$ Teile | 5 | 5 | 8 | 0 | 5 | 0 | 0 | 0 |
| Cerhydroxyd Teile | 0 | 0 | 0 | 0 | 0 | 1 | 0 | 0 |
| Komplex von Platin Teile | 0,002 | 0 | 0 | 0 | 0 | 0 | 0,002 | 0 |
| Graphit Teile | 0 | 4 | 4 | 0 | 0 | 0 | 0 | 4 |
| LOI % | 23,5 | 27,5 | 29,0 | 20,0 | 20,5 | 20,0 | 20,0 | 20,0 |
| Spezifischer elektrischer Widerstand Ohm cm | $8 \cdot 10^{15}$ | $5 \cdot 10^{16}$ | $5 \cdot 10^{16}$ | $8 \cdot 10^{15}$ | $4 \cdot 10^{16}$ | $8 \cdot 10^{15}$ | $8 \cdot 10^{15}$ | $1 \cdot 10^{16}$ |
| Tropfen beim Verbrennen | nein | nein | nein | ja | nein | nein | ja | ja |

Beispiel 3

Die in Beispiel 2 beschriebene Arbeitsweise mit Graphit als Zusatz wird wiederholt mit der Abänderung, daß an Stelle von 1000 Teilen EPDM 1000 Teile eines Mischpolymeren aus Styrol und Butadien (SBR) eingesetzt werden. Es werden folgende Ergebnisse erhalten:

TABELLE 3

| | Ansatz | Vergleichsansätze a | Vergleichsansätze b |
|---|---|---|---|
| Mischung aus Dimethylpolysiloxan und $SiO_2$ Teile | 5 | 0 | 0 |
| Graphit Teile | 4 | 0 | 4 |
| LOI % | 26,0 | 19,5 | 19,5 |
| Spezifischer elektrischer Widerstand Ohm · cm | $2 \cdot 10^{16}$ | $5 \cdot 10^{15}$ | $6 \cdot 10^{15}$ |
| Tropfen beim Verbrennen | nein | ja | ja |

Beispiel 4

Die in Beispiel 2 beschriebene Arbeiteweise mit Graphit als Zusatz wird wiederholt mit der Abänderung, daß an Stelle von 1000 Teilen EPDM 1000 Teile eines Mischpolymeren aus Äthylen und Vinylacetat (EVA) eingesetzt werden. Es werden folgende Ergebnisse erhalten:

TABELLE 4

| | Ansatz | Vergleichsansätze a | Vergleichsansätze b |
|---|---|---|---|
| Mischung aus Dimethylpolysiloxanen und $SiO_2$ Teile | 5 | 0 | 0 |
| Graphit Teile | 4 | 0 | 4 |
| LOI % | 28,0 | 22,0 | 22,0 |
| Spezifischer elektrischer Widerstand Ohm · cm | $1 \cdot 10^{14}$ | $5 \cdot 10^{13}$ | $5 \cdot 10^{13}$ |
| Tropfen beim Verbrennen | nein | ja | ja |

**Patentansprüche**

1. Flammabweisende Formmassen auf Grundlage von anderem organischem Polymer als Diorganopolysiloxan und von Diorganopolysiloxan, wobei dessen SiC-gebundene aliphatische Kohlenwasserstoffreste Methyl, Ethyl-, n-Propyl-, Isopropyl- oder Vinylreste sind, in Mengen von 1 bis 20 Gewichtsprozent, bezogen auf das Gewicht von anderem organischen Polymer als Diorganopolysiloxan, sowie gegebenenfalls Siliciumdioxyd mit einer Oberfläche von mindestens 50 $m^2/g$, dadurch gekennzeichnet, daß sie zusätzlich mindestens einen Stoff, der den Stoffklassen
(a) Graphit oder
(b) Edelmetallen oder deren Verbindungen bzw. Komplexe
angehört, enthalten.

2. Massen nach Anspruch 1, dadurch gekennzeichnet, daß sie Graphit in Mengen von 0,01 bis 20 Gewichtsprozent, bezogen auf das Gewicht von anderem organischem Polymer als Diorganopolysiloxan, enthalten.

3. Massen nach Anspruch 2, dadurch gekennzeichnet, daß sie Graphit in Mengen von 0,1 bis 10 Gewichtsprozent, bezogen auf das Gewicht von anderem organischem Polymer als Diorganopolysiloxan, enthalten.

4. Massen nach Anspruch 1, dadurch gekennzeichnet, daß sie Edelmetall oder Verbindung oder Komplex von Edalmetall in Mengen von 0,0001 bis 0,1 Gewichtsprozent, bezogen auf das Gewicht von anderem organischem Polymer als Diorganopolysiloxan, enthalten.

5. Massen nach Anspruch 4, dadurch gekennzeichnet, daß sie Edelmetall oder Verbindung oder Komplex von Edelmetall in Mengen von 0,001 bis 0,02 Gewichtsprozent, bezogen auf das Gewicht von anderem organischem Polymer als Diorganopolysiloxan, enthalten.

6. Massen nach Anspruch 1—5, dadurch gekennzeichnet, daß sie als Edelmetall Platin oder als Verbindung oder Komplex von Edelmetall Verbindung oder Komplex von Platin enthalten.

**Revendications**

1. Matières à mouler ignifuges à base d'un polymère organique autre qu'un poly-diorganosiloxane et d'un poly-diorganosiloxane dont les radicaux hydrocarbonés aliphatiques directement reliés à des atomes de silicium (liaisons Si-C) sont des radicaux méthyles, éthyles, n-propyles, iso-propyles, ou vinyles, en une proportion de 1 à 20% en poids par rapport au poids du polymère organique autre qu'un poly-diorganosiloxane, et éventuellement de silice ayant une surface d'au moins 50 $m^2/g$, matières à mouler caractérisées en ce qu'elles contiennent en outre au moins un corps pris dans l'ensemble constitué par

a) le graphite et

b) les métaux nobles et leurs composés, y compris leurs complexes.

2. Matières selon la revendication 1 caractérisées en ce qu'elles contiennent une quantité de graphite comprise entre 0,01 et 20% en poids par rapport au poids du polymère organique autre qu'un poly-diorganosiloxane.

3. Matières selon la revendication 2 caractérisées en ce qu'elles contiennent une quantité de graphite comprise entre 0,1 et 10% en poids par rapport au poids du polymère organique autre qu'un poly-diorganosiloxane.

4. Matières selon la revendication 1 caractérisées en ce qu'elles contiennent une quantité d'un métal noble ou d'un composé ou complexe d'un métal noble qui est comprise entre 0,0001 et 0,1% en poids par rapport au poids du polymère organique autre qu'un poly-diorganosiloxane.

5. Matières selon la revendication 4 caractérisées en ce qu'elles contiennent une quantité d'un métal noble ou d'un composé ou complexe d'un métal noble qui est comprise entre 0,001 et 0,02% en poids par rapport au poids du polymère organique autre qu'un poly-diorganosiloxane.

6. Matières selon l'une quelconque des revendications 1 à 5 caractérisées en ce qu'elles contiennent, comme métal noble, du platine, ou, comme composé ou complexe d'un métal noble, un composé ou complexe du platine.

**Claims**

1. Flame-resistant moulding compositions based on an organic polymer other than a diorganopolysiloxane and on a diorganopolysiloxane in which the SiC-bonded aliphatic hydrocarbon radicals are methyl, ethyl, n-propyl, isopropyl or vinyl radicals, in amounts of from 1 to 20 percent by weight, based on the weight of the organic polymer other than a diorganopolysiloxane, and optionally on silicon dioxide having a surface area of at least 50 $m^2/g$, characterised in that they contain in addition at least one substance belonging to the classes of substance

a) graphite or

b) noble metals or compounds or complexes thereof.

2. Compositions according to claim 1, characterised in that they contain graphite in amounts of from 0.01 to 20 percent by weight, based on the weight of the polymer other than a diorganopolysiloxane.

3. Compositions according to claim 2, characterised in that they contain graphite in amounts of from 0.1 to 10 percent by weight, based on the weight of the organic polymer other than a diorganopolysiloxane.

4. Compositions according to claim 1, characterised in that they contain a noble metal or a compound or complex of a noble metal in amounts of from 0.0001 to 0.1 percent by weight, based on the weight of the organic polymer other than a diorganopolysiloxane.

5. Compositions according to claim 4, characterised in that they contain a noble metal or a compound or complex of a noble metal in amounts of from 0.001 to 0.2 percent by weight, based on the weight of the organic polymer other than a diorganopolysiloxane.

6. Compositions according to claims 1 to 5, characterised in that they contain platinum as the noble metal or a compound or complex of platinum as the compound or complex of a noble metal.